# EUROPÄISCHE PATENTANMELDUNG

(11) **EP 4 300 027 A1**
(43) Veröffentlichungstag der Anmeldung: **03.01.2024**
(21) Anmeldenummer: 22182023.6
(22) Anmeldetag: 29.06.2022
(51) Int. Cl.: F28F 3/14, F28F 27/02

(54) **ANORDNUNG FÜR DEN TRANSPORT VON MEDIEN**

(71) Anmelder: TI Automotive Technology Center GmbH, 76437 Rastatt (DE)
(72) Erfinder: Boecker, Albert, 76275 Ettlingen (DE); Winter, Matthias, 76227 Karlsruhe (DE); Schaefer, Thorsten, 76889 Steinfeld (DE); Schuster, Manuel, 76137 Karlsruhe (DE)
(74) Vertreter: Reiser & Partner Patentanwälte mbB

(57) **Zusammenfassung**

Anordnung (1) für den Transport von Medien, umfassend zumindest einen Grundkörper (2), welcher zumindest eine Wand (3) ausbildet, wobei die Wand (3) zumindest abschnittsweise zwei in dem Grundkörper (2) ausgebildete Strömungskanäle (4, 5) begrenzt, dadurch gekennzeichnet, dass die Strömungskanäle (4, 5) durch zumindest einen in dem Grundkörper (2) angeordneten Trennkörper (6) zumindest abschnittsweise voneinander getrennt sind.

## Beschreibung

Die Erfindung betrifft eine Anordnung für den Transport von Medien, umfassend zumindest einen Grundkörper, welcher zumindest eine Wand ausbildet, die zumindest zwei in dem Grundkörper ausgebildete Strömungskanäle begrenzt.

Anordnungen für den Transport von Medien werden beispielsweise in der Elektromobilität benötigt. Akkumulatoren von Elektrofahrzeugen, insbesondere Lithium-Ionen-Akkumulatoren weisen eine optimale Leistungsfähigkeit nur innerhalb eines begrenzten Temperaturspektrums auf. Daher kann es je nach Umgebungstemperatur erforderlich sein, die Akkumulatoren zu erwärmen oder zu kühlen. Hierzu ist das Elektrofahrzeug mit einem Temperierkreislauf ausgerüstet, der eine Anordnung von Rohren aufweist, durch die Temperiermedien, beispielsweise Temperierflüssigkeit zu den Zellen des Akkumulators geleitet werden können, um diese innerhalb eines gewünschten Temperaturspektrums zu temperieren. Aufgrund der Beschränkungen des Bauraums soll die Temperiereinrichtung dabei möglichst kompakt sein.

Des Weiteren kann es erforderlich sein, Komponenten der gesamten Antriebseinheit von Elektrofahrzeugen zu temperieren und diese je nach Betriebszustand zu erwärmen oder zu kühlen. Hierzu gehören neben den Akkumulatoren die Leistungselektronik und der Elektromotor, beziehungsweise die Elektromotoren. Die Ladeelektronik und die dazugehörigen Steckverbindungen und Leitungen können ebenfalls mittels der Temperiereinrichtung temperiert werden. Dies ist insbesondere im Zusammenhang mit Schnellladevorgängen relevant.

Neben dem Einsatz in einer Antriebseinheit ergibt sich ein weiteres Einsatzgebiet im Zusammenhang mit der übrigen Fahrzeugelektronik, hier insbesondere die Temperierung von Sensoren und Bordcomputern. Ist ein Fahrzeug zum Autonomen Fahren ausgerüstet, werden leistungsfähige Sensoren und leistungsfähige Rechner benötigt, wobei die Systeme redundant vorhanden sind. Dadurch, dass der Bauraum in einem Fahrzeug beschränkt ist, ergeben sich auch bei diesen Systemen besondere Anforderungen an eine Temperiereinrichtung zur Temperierung der Komponenten.

Temperiermedien kommen ferner in Klimaanlagen zum Einsatz. Klimaanlagen, insbesondere mobile Klimaanlagen umfassen eine Rohranordnung, welche den Transport von Temperiermedium zwischen den einzelnen Aggregaten der Klimaanlage ermöglicht. Bei mobilen Klimaanlagen, beispielsweise bei Klimaanlagen für die Klimatisierung von Innenräumen von Fahrzeugen ist die Rohranordnung ein vergleichsweise komplexes Gebilde und umfasst häufig Rohre aus verschiedenen Materialien, beispielsweise Rohre aus Metall, Rohrabschnitte aus thermoplastischem Kunststoff und Rohrabschnitte aus gummiartigem Material. Zwar können hierbei die Einsatzbedingungen der Rohrabschnitte optimal auf die jeweiligen Anforderungen abgestimmt werden, die Rohranordnung ist jedoch kostenintensiv, aufwendig in der Montage und schwierig zu recyceln.

Aus der EP 3 919 299 A1 ist eine Rohranordnung für den Transport von Temperiermedium bekannt, bei welcher ein Grundkörper zumindest eine Wand ausbildet, die mehrere in den Grundkörper ausgebildete Strömungskanäle begrenzt.

Der Erfindung liegt die Aufgabe zugrunde, eine Anordnung für den Transport von Medien bereitzustellen, welche bei kompakter Gestalt eine Vielzahl von Strömungskanälen aufweisen kann und kostengünstig herstellbar ist.

Diese Aufgabe wird mit den Merkmalen der Ansprüche 1 und 15 gelöst. Auf vorteilhafte Ausgestaltungen nehmen die Unteransprüche Bezug.

Die erfindungsgemäße Anordnung für den Transport von Medien umfasst zumindest einen Grundkörper, welcher zumindest eine Wand ausbildet, die zumindest abschnittsweise zwei in dem Grundkörper ausgebildete Strömungskanäle begrenzt, wobei die Strömungskanäle durch zumindest einen in dem Grundkörper angeordneten Trennkörper zumindest abschnittsweise voneinander getrennt sind.

Der Grundkörper kann die Strömungskanäle begrenzen und dementsprechend abschnittweise Außenwände der Strömungskanäle ausbilden. Die Strömungskanäle sind im Inneren des Grundkörpers angeordnet und münden in Durchtrittsöffnungen nach außen. Die Durchtrittöffnungen können beispielsweise als Rohrstutzen geformt sein, wobei die Rohrstutzen zur Aufnahme von Rohren oder Schläuchen geeignet sind. Ebenso ist es denkbar, dass Aggregate wie Pumpen, Wärmetauscher oder dergleichen an die Durchtrittöffnungen angeschlossen sind. Die Strömungskanäle können Rohrleitungsabschnitte ausbilden, wobei der in den Grundkörper eingebettete Trennkörper die Ausbildung komplex geformter Strömungskanäle ermöglicht. Dabei können in dem Grundkörper mehrere Strömungskanäle angeordnet sein, so dass die Anordnung eine Rohrverzweigung oder Sammelleitung (Manifold) bilden kann.

Der Trennkörper ermöglicht die Ausgestaltung zusätzlicher Strömungskanäle innerhalb des Grundkörpers, wobei insbesondere hinsichtlich der Anordnung und Orientierung der Strömungskanäle sehr viele Variationsmöglichkeiten entstehen. Beispielsweise ist es denkbar, Strömungskanäle sowohl übereinander als auch nebeneinander anzuordnen. Die Anordnung kann dadurch besonders kompakt ausgebildet sein und gleichzeitig viele Strömungskanäle aufnehmen.

Der Trennkörper ist vorzugsweise separat zu dem Grundkörper ausgebildet. Dabei bilden der Grundkörper und der Trennkörper zwei Bauelemente, welche aber stoffschlüssig miteinander verbunden sein können. Der separat ausgebildete Trennkörper ermöglicht eine größere Vielfalt von Strömungskanälen und deren Anordnung innerhalb des Grundkörpers. Der Trennkörper kann stoffschlüssig, kraftschlüssig oder formschlüssig in dem Grundkörper fixiert sein.

Vorzugsweise ist der Grundkörper als Blasformteil ausgebildet. Durch das Blasformen ist es möglich, einen Grundkörper mit einer komplexen Gestalt herzustellen. Dabei formt der Grundkörper einen Hohlkörper mit einer oder mehreren Wänden, welche die im Inneren des Grundkörpers angeordneten Strömungskanäle begrenzen. Durch das Blasformen können Strömungskanäle mit einer großen Formenvielfalt hergestellt werden.

Als Material für den Grundkörper kommen vorzugsweise Kunststoffe wie thermoplastische Polymere oder thermoplastische Elastomere zum Einsatz. In Abhängigkeit der Druckverhältnisse der in den Strömungskanälen transportierten Medien kann der Grundkörper einschichtig, aber auch mehrschichtig ausgebildet sein. Eine mehrschichtige Ausgestaltung ist insbesondere vorteilhaft, um beispielsweise einer Diffusion verschiedener Komponenten einer Fluidmischung entgegenzuwirken. Die Strömungskanäle können in der für den Montageort erforderlichen Gestalt geformt und beispielsweise gekrümmt sein. Des Weiteren besteht eine große Freiheit in der Wahl der Querschnittsform der Strömungskanäle.

Vorzugsweise ist der Trennkörper als Einlegeteil ausgebildet, welches in die Blasform eingelegt und vor dem Blasformen so von dem Material des Grundkörpers umgeben ist, dass der Trennkörper nach dem Blasformen in den Grundkörper eingebettet ist.

Der Trennkörper kann im Wesentlichen flächig ausgebildet sein. Dadurch weist der Trennkörper eine einfache Gestalt auf und ist einfach und kostengünstig herstellbar. Dabei kann das Material aus polymerem oder metallischem Werkstoff bestehen. Dabei können die Materialien spritzgieß- oder blasformfähig sein.

In dem Trennkörper kann zumindest ein weiterer Strömungskanal ausgebildet sein. Bei dieser Ausgestaltung ist der Trennkörper vorzugsweise als Hohlkörper ausgebildet. Hierzu ist es beispielsweise denkbar, dass der Trennkörper als Rohr ausgebildet ist und in den Grundkörper eingebettet. Bei dieser Ausgestaltung begrenzt die Umfangswand des Rohres innenumfangsseitig den weiteren Strömungskanal und außenumfangsseitig jeweils abschnittsweise auch die beiden Strömungskanäle, die aus dem Grundkörper ausgebildet sind. Dabei ist aber insbesondere denkbar, dass der Trennkörper die beiden Strömungskanäle nur teilweise begrenzt. Der Anteil, den der Trennkörper an den Begrenzungswänden der beiden Strömungskanäle einnimmt, richtet sich dabei nach der Ausgestaltung der Strömungskanäle und der Anordnung des Trennkörpers innerhalb des Grundkörpers.

Der Trennkörper kann als Blasformteil ausgebildet sein. Dadurch kann auch der Trennkörper eine komplexe Gestalt aufweisen und insbesondere mehrere im Inneren des Trennkörpers angeordnete Strömungskanäle aufweisen.

In diesem Zusammenhang ist es insbesondere denkbar, dass der Trennkörper zumindest eine Wand ausbildet, die den weiteren Strömungskanal von den Strömungskanälen trennt. Ferner ist denkbar, dass der Grundkörper den Trennkörper schalenförmig umgibt.

Bei der Ausgestaltung der Anordnung mit einem Grundkörper als Blasformteil und einem Trennkörper als Blasformteil kann eine sehr komplexe Rohranordnung realisiert werden. Dabei können Strömungskanäle sowohl in einer ersten Ebene als auch in einer zweiten Ebene senkrecht zur ersten Ebene angeordnet werden (sowohl untereinander als auch nebeneinander). Des Weiteren ist es denkbar, dass sich Strömungskanäle überkreuzen und/oder in einem Abschnitt nebeneinander verlaufen und in einem anderen Abschnitt untereinander.

In einer alternativen Ausgestaltung ist es denkbar, dass mehrere Trennkörper vorgesehen sind, die in den Grundkörper eingebettet sind. Dabei sind gemäß einer vorteilhaften Ausgestaltung Trennkörper zumindest teilweise von anderen Trennkörpern umgeben. Dabei können Trennkörper auch als Hohlkörper ausgebildet sein und im Inneren mit Strömungskanälen versehen sein. Die Anordnung weist dementsprechend mehrere ineinander geschachtelte Trennkörper und/oder Grundkörper auf, so dass in der Anordnung besonders viele Strömungskanäle angeordnet sein können.

Dementsprechend sind mehrere Ausgestaltungen und Anordnungen von Trennkörpern möglich. Eine erste vorteilhafte Ausgestaltung sieht einen einzigen Trennkörper vor, der in dem Grundkörper angeordnet oder dem Grundkörper zugeordnet ist.

Eine zweite vorteilhafte Ausgestaltung sieht vor, dass mehrere Trennkörper in dem Grundkörper angeordnet sind. Jeder Trennkörper kann dabei einen Strömungskanal begrenzen. Beispielsweise ist es denkbar, mehrere Trennkörper nebeneinander in dem Grundkörper anzuordnen. Dabei ist jeder Trennkörper einem Strömungskanal zugeordnet. Je nach Anordnung der Trennkörper ist es aber auch möglich, dass ein Trennkörper auf einer Seite einen ersten Strömungskanal und auf der anderen Seite einen anderen Strömungskanal begrenzt.

Gemäß einer dritten Ausgestaltung sind mehrere, zumindest zwei, Trennkörper vorgesehen, wobei die Trennkörper ineinander geschachtelt sind. Bei dieser Ausgestaltung ist es beispielsweise denkbar, dass die Anordnung einen Wärmetauscher ausbildet.

Gemäß einer vierten Ausgestaltung sind in dem Grundkörper mehrere Trennkörper angeordnet, wobei erste Trennkörper nebeneinander und zweite Trennkörper ineinander geschachtelt angeordnet sind. Durch diese Ausgestaltung kann eine besonders komplexe Ausgestaltung einer Anordnung kostengünstig und einfach hergestellt werden.

In dem Grundkörper kann zumindest ein zumindest einen Strömungskanal beeinflussendes Funktionselement angeordnet sein. Das Funktionselement kann entweder direkt den Volumenstrom des in dem Strömungskanal geführten Mediums beeinflussen oder Zustandsdaten des Mediums wie Temperatur, Volumenstrom oder Druck erfassen. Das Funktionselement kann dabei das Medium in einem Strömungskanal, mehreren oder allen in der Anordnung angeordneten Strömungskanälen beeinflussen. Es ist auch denkbar, dass das Funktionselement als Kühler oder als Heizelement ausgebildet ist.

Das Funktionselement kann aus dem Grundkörper ausgeformt sein. Dies ist insbesondere dann denkbar, wenn das Funktionselement ein passives Funktionselement ist und keinerlei bewegliche Teile aufweist. Beispielsweise kann das Funktionselement ein Drosselventil bilden.

Das in den Strömungskanälen geführte Medium ist vorzugsweise ein Temperiermedium, wobei insbesondere flüssige Temperiermedien auf Wasserbasis, beispielsweise Wasser-Glykol-Mischungen in Betracht kommen. In alternativen Ausgestaltungen ist das Medium eine ölbasierte Flüssigkeit oder eine dielektrische Flüssigkeit, welche in den Strömungskanälen transportiert wird.

Das Funktionselement kann ein Ventil sein, wobei das Funktionselement Öffnungen aufweist, die in Kontakt zu den Strömungskanälen stehen. Das Ventil kann einen oder mehrere Strömungskanäle beeinflussen, den oder die Strömungskanäle öffnen oder verschließen oder den Querschnitt des oder der Strömungskanäle zur Änderung des Volumenstroms modifizieren.

Gemäß einer vorteilhaften Ausgestaltung ist das Ventil ein Rotationsventil. Rotationsventile finden häufig in Temperierkreisläufen zur Steuerung des Temperiermediums Einsatz. Das Rotationsventil umfasst ein Ventilgehäuse mit einer Ventilkammer, wobei die Ventilkammer eine Umfangswand aufweist, in die mindestens zwei Fluidöffnungen eingebracht sind, wobei die Ventilkammer einen Ventilkern aufnimmt, wobei der Ventilkern mit einer Kanalstruktur versehen ist, welche mit den Fluidöffnungen zusammenwirkt. Der Ventilkern ist rotatorisch beweglich in der Ventilkammer gelagert. Ein derartiges Rotationsventil ist beispielsweise aus der EP 4 008 935 A1 bekannt.

Bei der vorliegenden Ausgestaltung ist es insbesondere denkbar, dass das Ventilgehäuse einstückig und materialeinheitlich aus dem Grundkörper ausgebildet ist. Alternativ ist es denkbar, dass das Ventilgehäuse des Rotationsventils mehrteilig ausgebildet ist und der Grundkörper den äußeren Bestandteil des Ventilgehäuses ausbildet. Vorzugsweise ist das Rotationsventil zumindest teilweise in den Grundkörper eingebettet. Bei einem Rotationsventil ist vorteilhaft, dass eine Anpassung des Temperiermittelstroms durch Drehen des Ventilkerns erfolgt, wobei der Aktor zum Drehen des Ventils einfach ausgebildet und ansteuerbar sein kann.

Bei der erfindungsgemäßen Anordnung ist es denkbar, dass zumindest zwei Strömungskanäle in Öffnungen des Rotationsventils münden, die in einer Ebene senkrecht zur Längsachse angeordnet sind. Zumeist sind die Öffnungen eines Rotationsventils in Längsrichtung betrachtet übereinander angeordnet, was die Möglichkeiten der Fluidsteuerung begrenzt. Bei der erfindungsgemäßen Ausgestaltung ist es denkbar, dass Öffnungen in dem Rotationsventil vorgesehen sind, die sich auch in einer Ebene senkrecht zur Längsachse befinden. Dadurch erhöhen sich die Möglichkeiten zur Steuerung der Volumenströme in Richtung der Strömungskanäle. Des Weiteren ist es denkbar, die Anordnung mit Rotationsventilen besonders kompakt auszubilden.

Der Trennkörper kann einen Wärmeübertrager bilden. Ein besonders effektiver Wärmeübertrager ergibt sich insbesondere dann, wenn der Trennkörper aus metallischem Werkstoff ausgebildet ist. Zur Verbesserung der Übertragungsleistung kann der Trennkörper auf den den Strömungskanälen zugewandten Flächen mit einer Strukturierung versehen sein. Insofern kann der Trennkörper als Wärmetauscher-Einsatz aus metallischem Werkstoff ausgebildet sein. Das Wärmeübertragermedium kann ein Temperiermedien auf Wasserbasis, beispielsweise eine Wasser-Glykol-Mischung, eine ölbasierte Flüssigkeit oder eine dielektrische Flüssigkeit sein. Der Trennkörper kann Öffnungen aufweisen, welche mit den Strömungskanälen kommunizieren.

Bei dem erfindungsgemäßen Verfahren zur Herstellung einer Anordnung für den Transport von Medien wird in einem ersten Schritt zumindest ein Trennkörper in eine Blasform eingelegt und anschließend ein Vorformling aus polymerem Material so in der Blasform angeordnet, dass der Vorformling den Trennkörper zumindest teilweise umgibt, in einem nächsten Schritt wird die Anordnung mittels Blasformverfahren ausgeformt, wobei der Vorformling den Grundkörper ausbildet, welcher zumindest eine Wand ausbildet und zumindest zwei in dem Grundkörper ausgebildete Strömungskanäle begrenzt, wobei die Strömungskanäle durch den in dem Grundkörper angeordneten Trennkörper voneinander getrennt sind.

Gemäß einem weiteren erfindungsgemäßen Verfahren wird ein Vorformling aus polymerem Material in einer Blasform angeordnet, in einem nächsten Schritt wird die Anordnung mittels Blasformverfahren ausgeformt, wobei der Vorformling den Grundkörper ausbildet, welcher zumindest eine Wand ausbildet, anschließend wird die Blasform geöffnet und der Grundkörper und zwei Grundkörperteile getrennt, in einem nächsten Schritt wird zumindest ein Trennkörper in die Blasform eingelegt, die Blasform wieder geschlossen und die beiden Grundkörperteile stoffschlüssig und fluiddicht miteinander verbunden, wobei der Grundkörper den Trennkörper zumindest teilweise umgibt und zumindest zwei in dem Grundkörper ausgebildete Strömungskanäle begrenzt, wobei die Strömungskanäle durch den in dem Grundkörper angeordneten Trennkörper voneinander getrennt sind.

Einige Ausgestaltungen der erfindungsgemäßen Anordnung für den Transport von Medien werden nachfolgend anhand der Figuren näher erläutert. Diese zeigen, jeweils schematisch:
- Fig. 1: eine erste Ausgestaltung einer Anordnung im Schnitt;
- Fig. 2: eine zweite Ausgestaltung einer Anordnung im Schnitt;
- Fig. 3: die Anordnung gemäß Figur 1 im Querschnitt.

Die Figuren zeigen eine Anordnung 1 für den Transport von Medien. Bei den vorliegenden Ausgestaltungen dient die Anordnung 1 dem Transport von Temperiermedien in Form einer Kühlflüssigkeit dient. Die Anordnung 1 ist Teil der Temperiereinrichtung eines Elektrofahrzeugs ist. Durch die in der Anordnung 1 ausgebildeten Strömungskanäle 4, 5, 7 strömt dementsprechend Temperiermedium in Form von Kühlflüssigkeit zu den der Akkumulatoren, der Leistungselektronik, der Ladeelektronik und der Elektromotoren.

Die Anordnung 1 umfasst einen Grundkörper 2 in Form eines Hohlkörpers, welcher eine Wand 3 ausbildet, die Strömungskanäle 4, 5 begrenzt. In den Grundkörper 2 ist ein Trennkörper 6 eingebettet, der die beiden Strömungskanäle 4, 5 voneinander trennt.

Der Grundkörper 2 ist als Blasformteil ausgebildet und besteht aus polymerem Werkstoff.

Zur Herstellung der Anordnung 1 wird ein Trennkörper 6 in eine Blasform eingelegt, anschließend wird ein Vorformling in die Blasform gegeben, welcher den Trennkörper 6 zumindest teilweise aufnimmt. Bei der vorliegenden Ausgestaltung ist der Vorformling als Schlauch ausgebildet, welcher über den Trennkörper 6 gestülpt wird. Je nach Ausgestaltung der Anordnung 1 können dann noch Funktionselemente 9, beispielsweise Ventile, Pumpen, Sensoren und dergleichen in der Blasform angeordnet werden. Anschließend wird die Blasform geschlossen und im Blasformverfahren wird aus dem Vorformling der Grundkörper 2 ausgebildet. Dadurch, dass der Vorformling über den Trennkörper 6 gestülpt ist, ist der Trennkörper 6 nach dem Blasformen in den Grundkörper 2 eingebettet. Durch das Blasformen bilden sich innerhalb des Grundkörpers 2 Strömungskanäle 4, 5, 7 aus, wobei die Strömungskanäle 4, 5, 7 durch die Wand 3 des Grundkörpers 2 und den Trennkörper 6 voneinander abgegrenzt sind.

Gemäß einem alternativen Verfahren wird zunächst ein Vorformling in die Blasform gegeben, welche zwei mit einer Kavität versehenden Werkzeughälften umfasst, wobei der Vorformling vorzugsweise als Schlauch ausgebildet ist, anschließend wird die Blasform geschlossen indem die beiden Werkzeughälften aufeinander zu bewegt werden und mittels Blasformen wird zunächst der Grundkörper 2 ausgebildet. In einem nächsten Schritt wird die Blasform geöffnet, wobei der Grundkörper 2 in der Blasform derart fixiert ist, dass der Grundkörper 2 entlang der zwischen den beiden Werkzeughälften entstehenden Naht in zwei Grundkörperteile aufreißt. Zwischen den beiden Grundkörperteilen wird der Trennkörper 6 oder auch mehrere Trennkörper 6 und sofern erforderlich ein oder mehrere Funktionselemente 9 eingelegt und die Blasform wird wieder geschlossen, wobei sich die beiden Grundkörperteile wieder stoffschlüssig zu dem Grundkörper 2 verbinden. Vorzugsweise erfolgt das Fügen der beiden Grundkörperteile kurz nach der Formgebung des Grundkörpers 2, so dass die Temperatur der Grundkörperteile für eine stoffschlüssige Verbindung ausreicht.

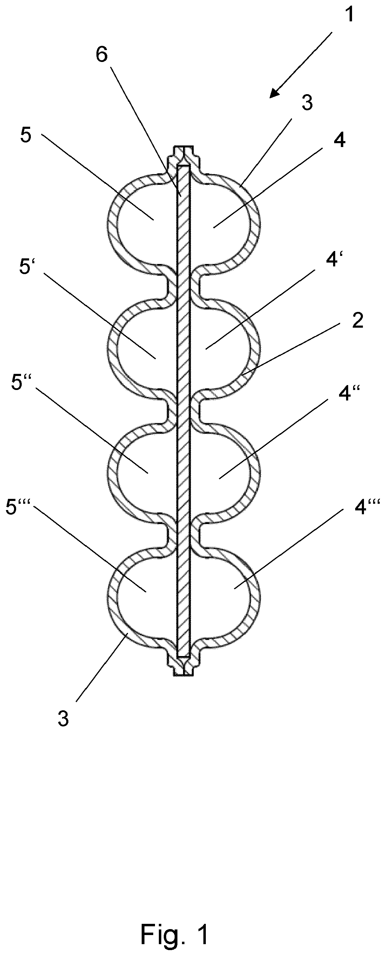

Figur 1 zeigt eine erste Ausgestaltung der Anordnung 1, bei der der Trennkörper 6 flächig ausgebildet ist. Bei der vorliegenden Ausgestaltung ist der Trennkörper 6 aus metallischem Werkstoff ausgebildet. Bei der vorliegenden Ausgestaltung bildet der Trennkörper 6 einen Wärmeübertrager. Zur Verbesserung der Wärmeübertragung sind die den Strömungskanälen 4, 5 zugewandten Flächen strukturiert. Gemäß einer vorteilhaften Ausgestaltung ist der Trennkörper 6 aus spritzgießfähigem Kunststoff ausgebildet.

Die Anordnung gemäß Figur 1 weist acht Strömungskanäle 4, 4', 4", 4‴, 5, 5', 5", 5‴ auf, wobei die Strömungskanäle 4, 4', 4", 4‴ ebenso wie Strömungskanäle 5, 5', 5", 5‴ jeweils übereinander angeordnet sind und Strömungskanäle 4, 4', 4", 4‴ jeweils benachbart zu Strömungskanälen 5, 5', 5", 5‴ sind. Nebeneinander benachbarte Strömungskanäle 4, 4', 4", 4‴, 5, 5', 5", 5‴ sind jeweils durch den Trennkörper 6 voneinander getrennt, übereinander angeordnete Strömungskanäle 4, 4', 4", 4‴, 5, 5', 5", 5‴ sind jeweils durch die aus dem Grundkörper 2 ausgebildete Wand 3 abgegrenzt.

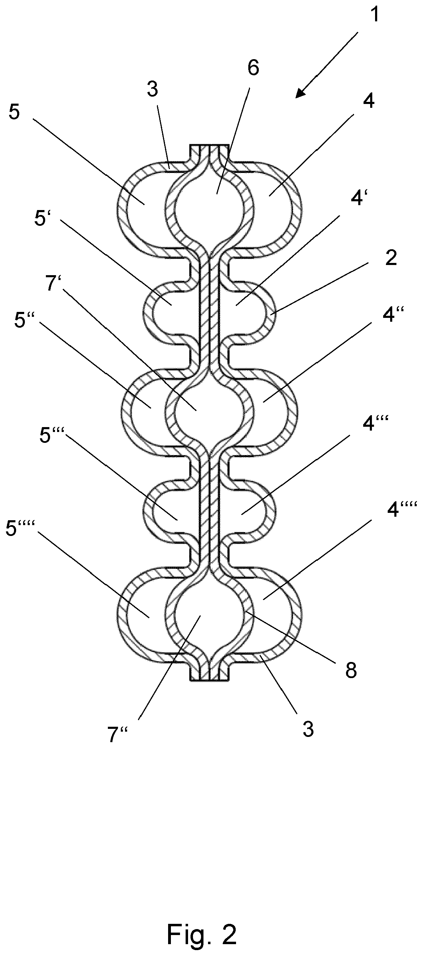

Bei der Ausgestaltung gemäß Figur 2 ist auch der Trennkörper 6 als Blasformteil ausgebildet und bildet einen Hohlkörper. Der Trennkörper 6 ist mittels Blasformen aus polymerem Material hergestellt. In dem Trennkörper 6 sind weitere Strömungskanäle 7, 7', 7" ausgebildet.

Der Trennkörper 6 bildet eine weitere Wand 8 aus, die die weiteren Strömungskanäle 7, 7', 7" von den Strömungskanälen 4, 4', 4", 4‴, 5, 5', 5", 5‴ trennt. Dabei umgibt der Grundkörper 2 den Trennkörper 6 schalenförmig. Die Anordnung weist dementsprechend 13 Strömungskanäle auf, wobei Strömungskanäle übereinander und nebeneinander in den Grundkörper 2 eingebettet sind.

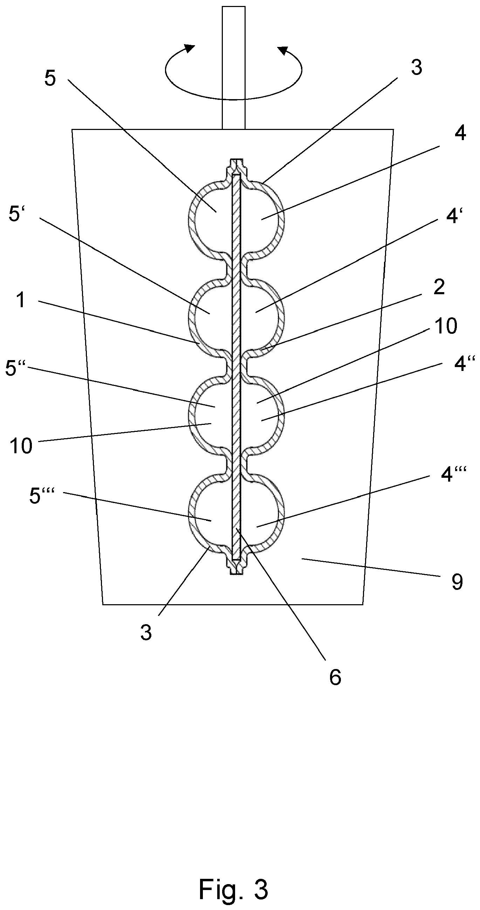

Figur 3 zeigt eine Anordnung 1 gemäß Figur 1 im Querschnitt, wobei die Schnittebene durch den Grundkörper 2 verläuft. Bei dieser Ausgestaltung ist den dem Grundkörper 2 ein die Strömungskanäle 4, 4', 4", 4"", 5, 5', 5", 5‴, 5ʺʺ beeinflussendes Funktionselement 9 angeordnet. Die mit 5, 5', 5", 5‴, 5ʺʺ bezeichneten Strömungskanäle befinden sich spiegelbildlich zu den Strömungskanälen 4, 4', 4", 4"", wobei sämtliche Strömungskanäle in das Funktionselement 9 münden. Bei der vorliegenden Ausgestaltung ist das Funktionselement 9 ein Ventil, wobei das Funktionselement 9 Öffnungen 10 aufweist, die in Kontakt zu den Strömungskanälen 4, 4', 4", 4"", 5, 5', 5", 5‴, 5ʺʺ stehen. Konkret ist das Ventil ein Rotationsventil.

Die Strömungskanäle 4, 4', 4", 4ʺʺ, 5, 5', 5", 5‴, 5ʺʺ münden dabei in Öffnungen 10 des Rotationsventils, wobei jeweils zwei Öffnungen 10 in einer Ebene senkrecht zur Längsachse angeordnet sind. Dadurch münden jeweils die Strömungskanäle 4, 4', 4", 4ʺʺ und 5, 5', 5", 5‴, 5ʺʺ übereinander Öffnungen und die Strömungskanäle 4, 5 und 4', 5' und 4", 5" und 4‴, 5‴ und 4ʺʺ, 5ʺʺ jeweils nebeneinander in einer Ebene senkrecht zur Längsachse des rotierbar in dem Rotationsventil gelagerten Ventilkerns.

In den Grundkörper 2 ist ein weiteres Funktionselement (nicht dargestellt) in Form eines Rückschlagventils eingebettet, welches einen Strömungskanal beeinflusst.

## Patentansprüche

1. Anordnung (1) für den Transport von Medien, umfassend zumindest einen Grundkörper (2), welcher zumindest eine Wand (3) ausbildet, wobei die Wand (3) zumindest abschnittsweise zwei in dem Grundkörper (2) ausgebildete Strömungskanäle (4, 5) begrenzt, **dadurch gekennzeichnet, dass** die Strömungskanäle (4, 5) durch zumindest einen in dem Grundkörper (2) angeordneten Trennkörper (6) zumindest abschnittsweise voneinander getrennt sind.

2. Anordnung nach Anspruch 1, **dadurch gekennzeichnet, dass** der Trennkörper (6) separat zu dem Grundkörper (2) ausgebildet ist.

3. Anordnung nach Anspruch 1 oder 2, **dadurch gekennzeichnet, dass** der Grundkörper (2) als Blasformteil ausgebildet ist.

4. Anordnung nach einem der Ansprüche 1 bis 3, **dadurch gekennzeichnet, dass** der Trennkörper (6) im Wesentlichen flächig ausgebildet ist.

5. Anordnung nach einem der Ansprüche 1 bis 4, **dadurch gekennzeichnet, dass** der Trennkörper (6) aus spritzgießfähigem oder metallischem Werkstoff besteht.

6. Anordnung nach einem der Ansprüche 1 bis 5, **dadurch gekennzeichnet, dass** in dem Trennkörper (6) zumindest ein weiterer Strömungskanal (7) ausgebildet ist.

7. Anordnung nach einem der Ansprüche 1 bis 6, **dadurch gekennzeichnet, dass** der Trennkörper (6) als Blasformteil ausgebildet ist.

8. Anordnung nach Anspruch 6 oder 7, **dadurch gekennzeichnet, dass** der Trennkörper (6) zumindest eine weitere Wand (8) ausbildet, die den weiteren Strömungskanal (7) von den Strömungskanälen (4, 5) trennt.

9. Anordnung nach einem der Ansprüche 1 bis 8, **dadurch gekennzeichnet, dass** der Grundkörper (2) den Trennkörper (6) schalenförmig umgibt.

10. Anordnung nach einem der Ansprüche 1 bis 9, **dadurch gekennzeichnet, dass** in dem Grundkörper (2) zumindest ein Funktionselement (9) angeordnet ist, welches in Kontakt mit einem in den Strömungskanälen geführten Medium bringbar ist.

11. Anordnung nach Anspruch 10, **dadurch gekennzeichnet, dass** das Funktionselement (9) ein Ventil ist, wobei das Funktionselement (9) Öffnungen (10) aufweist, die in Kontakt zu den Strömungskanälen (4, 5, 7) stehen.

12. Anordnungen nach Anspruch 11, **dadurch gekennzeichnet, dass** das Ventil ein Rotationsventil ist.

13. Anordnungen nach Anspruch 12, **dadurch gekennzeichnet, dass** zumindest zwei Strömungskanäle (4, 5, 7) in Öffnungen (10) des Rotationsventils münden, die in einer Ebene senkrecht zur Längsachse des Rotationsventils angeordnet sind.

14. Anordnungen nach einem der Ansprüche 1 bis 13, **dadurch gekennzeichnet, dass** der Trennkörper (6) einen Wärmeübertrager bildet.

15. Verfahren zur Herstellung einer Anordnung (1) für den Transport von Medien gemäß einem der vorherigen Ansprüche wird in einem ersten Schritt zumindest ein Trennkörper (6) in eine Blasform eingelegt und anschließend ein Vorformling aus polymerem Material so in der Blasform angeordnet, dass der Vorformling den Trennkörper (6) zumindest teilweise umgibt, in einem nächsten Schritt wird die Anordnung (1) mittels Blasformverfahren ausgeformt, wobei der Vorformling den Grundkörper (2) ausbildet, welcher zumindest eine Wand (3) ausbildet und zumindest zwei in dem Grundkörper (2) ausgebildete Strömungskanäle (4, 5) begrenzt, wobei die Strömungskanäle (4, 5) durch den in dem Grundkörper (2) angeordneten Trennkörper (6) voneinander getrennt sind.

16. Verfahren zur Herstellung einer Anordnung (1) für den Transport von Medien gemäß einem der Ansprüche 1 bis 14 wird in einem ersten Schritt ein Vorformling aus polymerem Material in einer Blasform angeordnet, in einem nächsten Schritt wird die Anordnung (1) mittels Blasformverfahren ausgeformt, wobei der Vorformling den Grundkörper (2) ausbildet, welcher zumindest eine Wand (3) ausbildet, anschließend wird die Blasform geöffnet und der Grundkörper (2) und zwei Grundkörperteile getrennt, in einem nächsten Schritt wird zumindest ein Trennkörper (6) in die Blasform eingelegt, die Blasform wieder geschlossen und die beiden Grundkörperteile stoffschlüssig miteinander verbunden, wobei der Grundkörper (2) den Trennkörper (6) zumindest teilweise umgibt und zumindest zwei in dem Grundkörper (2) ausgebildete Strömungskanäle (4, 5) begrenzt, wobei die Strömungskanäle (4, 5) durch den in dem Grundkörper (2) angeordneten Trennkörper (6) voneinander getrennt sind.
